# EUROPÄISCHE PATENTSCHRIFT

(11) **EP 2 455 722 B1**
(45) Veröffentlichungstag und Bekanntmachung des Hinweises auf die Patenterteilung: **26.10.2016**
(21) Anmeldenummer: 11188331.0
(22) Anmeldetag: 08.11.2011
(51) Int. Cl.: G01D 5/249, G01D 5/347, G01D 5/248, G01D 5/244, G01D 5/245

(54) **Verfahren und Inkrementalwertgeber zur Bestimmung einer Istlage eines Körpers entlang eines Messweges mit einer wenigstens eine Lücke aufweisenden Maßverkörperung**
Method and incremental encoder for determining the actual position of a body along a measuring path with a material measure that has at least one gap
Procédé et générateur de valeurs incrémentielles destinés à la détermination de la position réelle d'un corps le long d'une trajectoire de mesure doté d'un corps de mesure comprenant au moins un creux

(30) Priorität: 22.11.2010 DE 102010061738
(43) Veröffentlichungstag der Anmeldung: 23.05.2012
(73) Patentinhaber: Baumer Hübner GmbH, 10589 Berlin (DE)
(72) Erfinder: Hiller, Bernhard, 13465 Berlin (DE); Loharens, Axel, 13189 Berlin (DE); Kirchberger, Roland, 10787 Berlin (DE); Schneider, Michael, 78462 Konstanz (DE)
(74) Vertreter: Strauss, Steffen

(56) Entgegenhaltungen:
- EP-A1- 0 819 913
- WO-A1-2011/032971
- DE-C2- 19 621 015

## Beschreibung

Die Erfindung betrifft ein Verfahren zum Bestimmen einer Istlage eines Körpers entlang eines Messweges und/oder deren Änderung, bei dem eine zumindest eine Lücke aufweisende Lagekodierung mit einer Vielzahl von entlang des Messweges mit einer vorbestimmten Istortsfrequenz angeordneten Positionsmarkern abgetastet und ein für die Istlage und/oder deren Änderung repräsentatives Lagesignal erzeugt wird.

Ferner betrifft die Erfindung einen Inkrementalwertgeber zur Bestimmung einer Istlage eines Körpers entlang eines Messweges und/oder deren Änderung, wobei der Inkrementalwertgeber im Betrieb ein für die Istlage und/oder deren Änderung repräsentatives Lagesignal ausgibt, mit wenigstens einer sich entlang des Messweges erstreckenden Maßverkörperung, die durch wenigstens eine Lücke unterbrochen und mit einer eine Vielzahl von Positionsmarkern aufweisenden Lagekodierung ausgebildet ist, wobei die Positionsmarker entlang des Messweges mit einer vorgegebenen Istortsfrequenz angeordnet sind, und mit wenigstens zwei entlang des Messweges voneinander beabstandet angeordneten Sensoranordnungen zur Abtastung der Lagekodierung, von denen im Betrieb stets zumindest eine außerhalb der Lücke angeordnet ist.

Des Weiteren betrifft die Erfindung eine entlang eines Messweges anordenbare Maßverkörperung für einen Inkrementalwertgeber, mit einer Lagekodierung, die eine Vielzahl von entlang der Maßverkörperung mit einer vorgegebenen Istortsfrequenz angeordneten Positionsmarkern aufweist, wobei die Maßverkörperung im Betrieb des Inkrementalwertgebers durch wenigstens eine Lücke unterbrochen ist.

Verfahren und Inkrementalwertgeber sowie Maßverkörperungen für Inkrementalwertgeber zur Bestimmung von Istlagen eines Körpers entlang eines Messweges und/oder deren Änderung sind allgemein bekannt. Sie finden zum Beispiel zur Überwachung und Steuerung mechanischer Bewegungsabläufe vielfach Anwendung. Beispielsweise zeigt die DE 196 21 015 C2 eine Vorrichtung zur Positionserfassung von bewegten Maschinenteilen, deren Maßverkörperung aus mehreren Taktlinealen zusammengesetzt ist. Ferner werden Inkrementalwertgeber für die Drehzahlerfassung und Steuerung von Motoren eingesetzt.

Inkrementalwertgeber unterscheiden sich von Absolutwertgebern dadurch, dass sie Istlagen bzw. Istlageänderungen eines Körpers nur relativ zu einer Ausgangslage an einer Ausgangsschnittstelle zur Verfügung stellen. Dabei wird der Abstand zur Ausgangslage vielfach anhand einer Anzahl von zwischen der Ausgangslage und der Istlage angeordneten Positionsmarken bestimmt. Absolutwertgeber können, wie der Name sagt, die Lage absolut, also nicht nur relativ zu einer Ausgangslage bestimmen. Die Absolutlage ist vorzugsweise unmittelbar in der Lagekodierung der Maßverkörperung kodiert.

Insbesondere bei der Bestimmung der Istlage und/oder deren Änderung von großen Körpern, beispielsweise von einer Welle einer Windkraftanlage, sind bekannte Maßverkörperungen unpraktisch. Bisher wurden Maßverkörperungen an die Dimension des zu überwachenden Körpers angepasst und oftmals in einer geschlossenen Form am Körper montiert. Folglich sind die bekannten Maßverkörperungen teilweise sehr groß sowie aufwändig herzustellen und zu montieren.

Vorkonfektionierte Maßverkörperungen können oftmals nicht verwendet werden, da Maßabweichungen des Körpers mit einer derartigen Maßverkörperung nicht ohne weiteres ausgeglichen werden können. Zum Beispiel kann der Durchmesser der Welle der Windkraftanlage um bis zu 1 mm oder mehr von einem Sollwert abweichen. Eine im Hinblick auf den Sollwert gefertigte Maßverkörperung kann, wenn überhaupt, nur schwierig an einer solchen Welle montiert werden.

Auch sind Maßverkörperungen für unregelmäßige Messwege schwierig herzustellen. Um beispielsweise Bewegungen des Körpers entlang eines Messweges, der aus translatorischen und/oder rotatorischen Bewegungen zusammengesetzt ist, herzustellen, muss eine entsprechend und womöglich unregelmäßig geformte Maßverkörperung hergestellt werden. Eine Fertigung einer solchen Maßverkörperung ist jedoch sehr anfällig für Maßtoleranzen.

Werden Maßverkörperungen an größere Maßtoleranzen aufweisende Körper angepasst, wobei die Istortsfrequenz der Positionsmarker unverändert bleibt, kann die von einer Folgeelektronik erwartete Messauflösung durch den die konfektionierte Maßverkörperung aufweisenden Inkrementalwertgeber womöglich nicht geliefert werden. Ferner kann ein solcher Inkrementalwertgeber nicht auf im Lebenszyklus des Inkrementalwertgebers auftretende Maßänderungen des Körpers eingehen.

In der WO2011/032971 A1 wird eine Vorrichtung zur Gewinnung von Winkelsignalen an einem um eine Achse rotierenden Bauteil beschrieben. Dazu weist die Vorrichtung einen Markenträger auf, der eine vom Umfang des rotierenden Bauteils unabhängige Markenteilung aufweist und direkt an dem rotierenden Bauteil befestigt ist. Der Endbereich des Markenstreifens bildet nach Befestigung am Bauteil einen Stoss-, Lücken- oder Überlappungsbereich, welcher als Triggermarke für die Winkelmessung dient.

Die EP 0 819 913 A1 zeigt eine Vorrichtung mit zwei Sensoren und einer zusätzlicher Komparator-Einheit die Fehlerquellen an der Stosskante eines Taktlinealabschnitts eliminieren soll. Bei einer Bewegung des Taktlinealabschnitts empfangen beide Sensoren Signale entsprechend den am Schlitten vorbeigeführten Codemarkierungen.

Es ist daher Aufgabe der Erfindung, die bekannten Inkrementalwertgeber so zu verbessern, dass sie flexibler eingesetzt werden und von der Folgeelektronik erwartete Signale liefern können.

Für das eingangs genannte Verfahren wird die Aufgabe dadurch gelöst, dass zum Erzeugen des Lagesignals die Istortsfrequenz in eine von der Länge der Lücke unabhängige Sollortsfrequenz umgerechnet wird.

Für den eingangs genannten Inkrementalwertgeber wird die Aufgabe durch eine Umrecheneinheit gelöst, durch welche die von den Sensoranordnungen abgetastete Istortsfrequenz in eine Sollortsfrequenz umrechenbar ist.

Für die eingangs genannte Maßverkörperung wird die Aufgabe durch eine Verbindungsvorrichtung zur unverlierbaren Verbindung von an die Lücke angrenzenden Enden der Maßverkörperung miteinander gelöst, wobei die Verbindungsvorrichtung in einem mit den Enden verbundenen Zustand zumindest teilweise entlang der Maßverkörperung federelastisch nachgebend ausgebildet ist.

Die erfindungsgemäße Lösung ist konstruktiv einfach und hat den Vorteil, dass Maßtoleranzen des zu überwachenden Körpers sowie Maßänderungen im Betrieb des Inkrementalgebers durch die Maßverkörperung mechanisch ausgeglichen und diese Toleranzen bzw. Änderungen durch eine Änderung der Länge der Lücke aufgefangen werden. Hierdurch hervorgerufene Änderungen der durch die Sensoranordnungen erzeugten Sensorsignale werden durch die Umrechnung der Ist- in die Sollortsfrequenz aufgefangen. Unabhängig von der Länge der Lücke und auch bei Änderung der Länge kann der Inkrementalwertgeber der Folgeelektronik ein Lagesignal mit der erwarteten Sollortsfrequenz liefern. Das Lagesignal kann ein rechteck- oder sinusförmiges Signal, ein ein- oder mehrkanaliges oder ein eine digital kodierte Inkrementallage repräsentierendes Signal oder ein unmittelbar von diesen, zum Beispiel durch zeitliche Differentiation oder Integration, abgeleitetes Signal sein.

Dabei kann die Istortsfrequenz die gegebenenfalls örtlich variable Frequenz der Anordnung der Positionsmarker entlang der Maßverkörperung oder ein beispielsweise interpoliertes Vielfaches (Faktor größer oder kleiner 1) dieser Frequenz sein, wobei die Positionsmarker in unterschiedlichen, voneinander abweichenden Frequenzen entlang des Messweges angeordnet sein können. Zur Verbesserung der Messgenauigkeit des Inkrementalwertgebers können von den Positionsmarkern abgeleitete Messsignale einem Berechnungsschritt zugeführt und hierdurch ein Signal erzeugt werden, dessen Istortsfrequenz größer ist als die Frequenz, mit der die Positionsmarker entlang des Messweges angeordnet sind. Die erhöhte Istortsfrequenz repräsentiert hierbei interpolierte Positionsmarker, die entlang der Maßverkörperung dichter beieinander angeordnet sind als die Positionsmarker der Maßverkörperung. Die Istortsfrequenz und die Sollortsfrequenz können sich in der Regel voneinander unterscheiden.

Mit der Umrechnung von der Istortsfrequenz in die Sollortsfrequenz unterscheidet sich die erfindungsgemäße Lösung von der Vorrichtung der DE 196 21 015 C2, in der die Istortsfrequenz stets unverändert ausgegeben wird und keine Frequenzänderung möglich ist.

Die erfindungsgemäße Lösung kann durch verschiedene, jeweils für sich vorteilhafte, beliebig miteinander kombinierbare Ausgestaltungsformen weiter verbessert werden. Auf diese Ausgestaltungen und die mit ihnen verbundenen Vorteile wird im Folgenden eingegangen.

So kann in einer Weiterbildung des Verfahrens zum Erzeugen des Lagesignals ein vorbestimmter, der wenigstens eine Lücke enthaltende Abschnitt des Messweges abgefahren und die Länge des Abschnitts inklusive der Lücke in Istperioden der mit der Istortsfrequenz angeordneten Positionsmarker oder interpolierten Positionsmarker ermittelt werden. Die Istortsperiode kann also dem kleinsten räumlichen Intervall entsprechen, in dem die Positionsmarker wiederkehrend entlang des Messweges bzw. der Maßverkörperung angeordnet sind, wobei mit dem Begriff Positionsmarker die Positionsmarker der Maßverkörperung oder die interpolierten Positionsmarker bezeichnet werden kann. Jeweils eine Istortsperiode kann proportional zum Kehrwert der Istortsfrequenz sein.

Die Länge der Lücke in Istortsperioden kann durch eine Abtastung der Lagekodierung außerhalb der Lücke ermittelt werden. Hierzu sind die Sensoranordnungen entlang des Messweges so weit voneinander entfernt angeordnet, dass stets zumindest eine der Sensoranordnungen außerhalb der Lücke angeordnet ist und die Lagekodierung abtasten kann.

Um das Lagesignal zu Beginn des Betriebs erzeugen zu können, kann der Abschnitt bei einer Inbetriebnahme des Inkrementalwertgebers vor dessen regulärem Betrieb abgefahren und die Länge des Abschnitts ermittelt werden. Zumindest um Längenänderungen des Messweges und hieraus resultierende Längenänderungen der Lücke im Betrieb erkennen zu können, kann die Länge des Abschnitts auch im Betrieb ermittelt werden. Beispielsweise kann die Länge des Abschnitts in ausgewählten Intervallen oder Betriebszuständen ermittelt werden. Um eine möglichst kontinuierliche Überwachung der Länge der Lücke gewährleisten zu können, kann die Länge des Abschnitts alternativ durchgehend im laufenden Betrieb des Inkrementalwertgebers ermittelt werden.

Damit eine möglichst genaue Umrechnung der Istortsfrequenz durchgeführt werden kann, kann es vorteilhaft sein, eine möglichst große Menge von Istortsperioden zu verwenden. Daher kann der Abschnitt die Gesamtlänge des Messweges einschließlich der Lücke umfassen und eine Gesamtanzahl von entlang des Messweges anordenbaren Positionsmarkern bzw. von Istortsperioden ermittelt werden. Insbesondere bei Verwendung des Inkrementalwertgebers mit sich im Wesentlichen dauerhaft in eine Richtung drehenden Wellen, beispielsweise den Antriebswellen von Windkraftanlagen, kann somit ebenfalls eine einfache kontinuierliche Überwachung der Länge des Messweges realisiert sein. Auch wenn sich die Bewegungsrichtung des Körpers im Betrieb sporadisch ändert, er jedoch zumindest ab und zu den gesamten Messweg hinter sich legt, kann die Gesamtlänge des Messweges in Istortsperioden ermittelt und zur Erzeugung des Lagesignals verwendet werden.

Zum Erzeugen des Lagesignals kann die Anzahl der Istortsperioden mit einer Sollmenge von Sollortsperioden verglichen und hieraus eine Umrechenvorschrift für die Istortsfrequenz ermittelt werden. Folglich kann eine Umrechenvorschrift erzeugt werden, welche eine sich beispielsweise durch Längenänderungen der Lücke hervorgerufene Änderung der Menge an Istortsperioden berücksichtigt, so dass die Folgeelektronik das Lagesignal mit der erwarteten Sollortsfrequenz bzw. Sollauflösung erhält. Die Umrechenvorschrift kann also an die Länge der Lücke entlang des Messweges angepasst sein.

Beispielsweise kann eine Folgeelektronik des Inkrementalwertgebers 1024 Sollortsperioden pro 360°-Drehung einer Welle erwarten, was pro Umdrehung der Welle 1024 Inkrementen, etwa Pulsen oder Flanken im Lagesignal entsprechen kann. Weist nun die Maßverkörperung ihrerseits 1024 Positionsmarker auf und hat die Lücke eine Länge von 100 Istortsperioden, so würde der Inkrementalwertgeber ohne Umrechnung der Ist- in die Sollortsfrequenz 1124 Inkremente pro 360°-Drehung an die Folgeelektronik senden. Die Folgeelektronik würde die 100 überzähligen Positionsmarker oder Inkremente als eine weitere Drehung der Welle auslegen, was zu einer Fehlfunktion beispielsweise der Windkraftanlage folgen kann. Eine solche Fehlfunktion kann darin bestehen, dass Rotorblätter nicht in der vorgesehenen Position angeordnet sind.

Zum Erzeugen des Lagesignals kann die Anzahl der Istortsperioden mit einer Sollanzahl von Sollortsperioden verglichen und hieraus die Umrechenvorschrift für die Istortsfrequenz ermittelt werden. Beispielsweise kann die Gesamtanzahl von Istortsperioden durch die Anzahl von in der Sollmenge vorhandenen Sollortsperioden dividiert und hieraus ein Umrechenfaktor für die Istortsfrequenz ermittelt werden. Zur Markierung von Anfang und Ende des Messweges kann die Lücke bzw. eine ausgesuchte Stelle der Lücke, beispielsweise deren Rand verwendet werden.

Damit der Inkrementalwertgeber die Umrechenvorschirft selbsttätig durchführen kann, kann im Betrieb der Umrecheneinheit eingangsseitig zumindest ein Sensorsignal mit der Istortsfrequenz von wenigstens einem der zwei Sensoranordnungen zugeführt sein. An einem Signalausgang der Umrecheneinheit kann ein Ausgangssignal anliegen, in dem die von der Istortsfrequenz abgeleitete Sollortsfrequenz enthalten ist.

Die Lagekodierung kann durch die Lücke unterbrochen sein. Um zu gewährleisten, dass stets die Sensoranordnung zur Erzeugung des Lagesignals verwendet wird, die die Lagekodierung außerhalb der Lücke abtastet, können an die Lagekodierung angrenzende Bereiche der Lücke mit einer von der Lagekodierung abweichenden Endlagekodierung ausgeformt sein. Erreicht eine der Sensoranordnungen die Endlagekodierung, so kann der Inkrementalwertgeber von der momentan die Lagekodierung abtastenden Sensoranordnung auf die jeweils andere Sensoranordnung umschalten. Durch ein abruptes Ende der Lagekodierung womöglich auftretende Störungen beim Umschalten der Sensoranordnungen werden so vermieden.

Die Endlagekodierung kann so ausgebildet sein, dass die von den Sensoranordnungen bei der Abtastung der Endlagekodierung erzeugten Sensorsignale von denen beim Abtasten der Lagekodierung erzeugten Signalen unterscheidbar sind. Beispielsweise kann die Endlagekodierung Endlagemarker aufweisen, die entlang des Messweges in einer von der Istortsfrequenz der Lagekodierung abweichenden Ortsfrequenz angeordnet sind. Diese Ortsfrequenz der Endlagemarker kann beispielsweise größer und insbesondere doppelt so groß sein wie die Istortsfrequenz.

Um einen reibungslosen Betrieb des Inkrementalwertgebers gewährleisten zu können, sollte die Maßverkörperung im Wesentlichen unverlierbar am Körper angeordnet sein. Dabei ist es jedoch oft nachteilig, wenn die Maßverkörperung mit dem Körper verschweißt oder anders unlösbar an diesem fixiert wäre. Auch ein Anbringen von Befestigungsorganen am Körper kann nachteilig sein. Beispielsweise dürfen regelmäßig in rotierenden Körpern keine Bohrungen zur Aufnahme von Befestigungsschrauben für die Maßverkörperung vorgesehen werden. Um die Maßverkörperung dennoch im Wesentlichen unverschieblich mit dem Körper verbinden zu können, können an die Lücke angrenzende Endstücke der Maßverkörperung durch eine Verbindungsvorrichtung unverlierbar miteinander verbunden sein. Die Verbindungsvorrichtung kann zumindest teilweise entlang des Messweges federelastisch nachgiebig ausgebildet sein und eine Zugkraft auf die Enden ausüben. Diese federelastische Zugkraft kann die Maßverkörperung, die insbesondere bandförmig ausgebildet sein kann, um den Körper spannen und so eine reibschlüssige Verbindung zwischen Maßverkörperung und Körper erzeugen. Eine Verwendung von gesonderten Befestigungsorganen zwischen der Maßverkörperung und dem Körper ist nicht notwendig.

Ein weiterer Vorteil der federelastisch ausgebildeten Verbindungsanordnung ist, dass die Verbindungsvorrichtung auch thermisch bedingte mechanische Spannungen in der entlang des Messweges montierten Maßverkörperung ausgleichen kann. Soll beispielsweise die Lage einer Welle der Windkraftanlage ermittelt werden, so kann sich der Durchmesser der Welle im Jahreszyklus ändern, da die Welle im Sommer Umgebungstemperaturen von bis zu 60° C oder mehr und im Winter von unter -40° C ausgesetzt sein kann. Im Betrieb der Windkraftanlage erzeugte Wärme kann darüber hinaus dazu führen, dass sich die Welle sogar bei einer Umgebungstemperatur von - 30° C auf 40° C erwärmt. Die Welle kann sich also im Betrieb durchaus erheblich ausdehnen oder zusammenziehen. Hierdurch kann die Länge des Messweges, der entlang des Umfangs der Welle verlaufen kann, deutlich vom Sollwert abweichen und sich sogar im Betrieb ändern. Durch Verwendung des erfindungsgemäßen Inkrementalwertgebers liegt die Maßverkörperung jedoch immer fest an der Welle an und die Folgeelektronik erhält über das gesamte Jahr hinweg Lagesignale mit der erwarteten Sollortsfrequenz. Eine Änderung der Länge der Lücke wirkt sich weder auf die Befestigung der Maßverkörperung noch auf das Lagesignal aus.

Um schon beim Start des Inkrementalwertgebers, also noch vor der ersten Ermittlung der Umrechenvorschrift der aktuellen Betriebsperiode des Inkrementalgebers, die erwartete Sollortsfrequenz an die Folgeelektronik liefern zu können, kann die letzte bekannte Umrechnungsvorschrift verwendet werden. Bei einer derartigen Vorgehensweise kann es jedoch zu einer Falschberechnung der Istortsfrequenz kommen. Beispielsweise kann die letzte bekannte Umrechenvorschrift bei einer Wellentemperatur von 40° C bestimmt worden sein. Seit dem Ende dieser Betriebsperiode kann die Welle zum Beispiel um 60° C auf eine Temperatur von - 20° C abgekühlt und entsprechend geschrumpft sein. Die letzte bekannte Umrechenvorschrift würde also zu falschen Ergebnissen führen. Folglich kann es vorteilhaft sein, andere bekannte Umrechenvorschriften beim Start des Inkrementalwertgebers zu verwenden. Beispielsweise könnte bekannte und kurz nach früheren Starts ermittelte Umrechenvorschriften direkt oder zum Beispiel gemittelt angewandt werden. Ferner kann die aktuelle Wellentemperatur zur Selektion von bekannten Umrechenvorschriften verwendet werden. Der Inkrementalwertgeber kann also nach längerem Betrieb und insbesondere nach mehreren Betriebsperioden die beim Start zu verwendende Umrechenvorschrift immer genauer vorhersagen.

Für den ordnungsgemäßen Betrieb des Inkrementalwertgebers kann die Verbindungsvorrichtung außerhalb eines Kollisionsbereichs der wenigstens zwei Sensoren angeordnet sein. Insbesondere federelastisch ausgebildete Halteelemente können in Form von Halteklammern ausgebildet sein, die den Messweg zweiseitig flankieren und die entlang eines Mittelteils federnd ausgeformt sein können. Die Halteklammern entlang des Messweges passierende Sensoranordnungen berühren diese Halteklammern nicht.

Im Folgenden ist die Erfindung beispielhaft anhand von Ausführungsbeispielen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

Es zeigen:
- Fig. 1: eine schematische Darstellung eines Inkrementalwertgebers mit einer Welle, deren Position bestimmt werden soll;
- Fig. 2: eine schematische Darstellung einer erfindungsgemäßen Maßverkörperung;
- Fig. 3 bis 5: schematische Darstellungen von Ausführungsbeispielen von erfindungsgemäßen Verfahren zum Bestimmen einer Istlage eines Körpers;
- Fig. 6: eine schematische Darstellung eines weiteren Ausführungsbeispiels der erfindungsgemäßen Maßverkörperung;
- Fig. 7 bis 9: schematisch perspektivische Darstellungen eines weiteren Ausführungsbeispiels der erfindungsgemäßen Maßverkörperung in verschiedenen Ansichten;
- Fig. 10: eine schematische Darstellung eines weiteren Ausführungsbeispiels der erfindungsgemäßen Maßverkörperung.

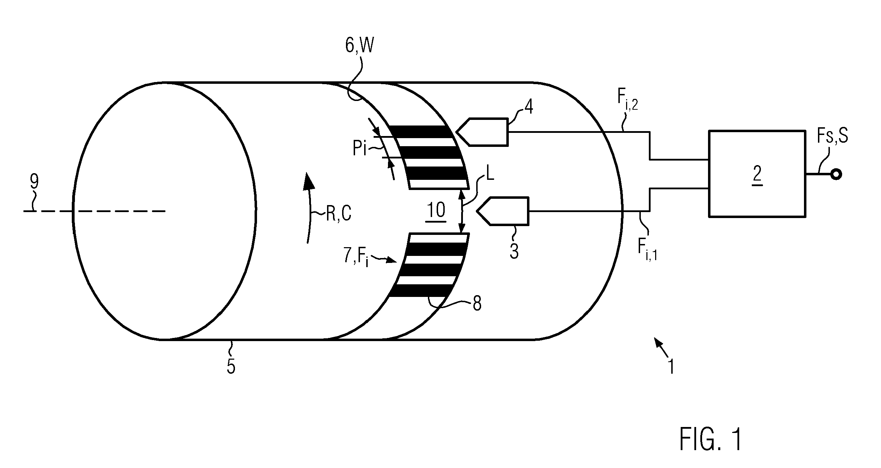

Zunächst sind Aufbau und Funktion eines Inkrementalwertgebers 1 mit Bezug auf das Ausführungsbeispiel der Fig. 1 beschrieben. Der Inkrementalwertgeber 1 kann eine Umrecheneinheit 2 aufweisen, die eingangsseitig mit einer ersten und einer zweiten Sensoranordnung 3, 4 verbunden sein kann. Die Sensoranordnungen 3, 4 können eine an einem Körper 5 unverschieblich entlang eines Messweges W angeordnete Maßverkörperung 6 abtasten. Die Maßverkörperung 6 kann eine Lagekodierung 7 einer Vielzahl von Positionsmarkern 8 aufweisen. Im schematisch gezeigten Ausführungsbeispiel ist eine Auswahl von Positionsmarkern 8 als sich quer zur Maßverkörperung 6 erstreckende dunkle Balken gezeigt. Die Positionsmarker 8 können zu benachbarten Positionsmarkern 8 einen konstanten Abstand aufweisen und wiederkehrend in diesem Abstand, der auch als Istortsperiode Pᵢ bezeichnet werden kann, angeordnet sein. Die Positionsmarker 8 können also entlang der Maßverkörperung 6 mit einer vorgegebenen und insbesondere konstanten Istortsfrequenz Fᵢ angeordnet sein. Die mit der Istortsfrequenz Fᵢ angeordneten Positionsmarker 8 können also mit der Istortsperiode Pᵢ wiederkehrend entlang der Maßverkörperung 6 auftreten, wobei die Istortsperiode Pᵢ den Kehrwert der Istortsfrequenz Fᵢ entsprechen kann.

Im Ausführungsbeispiel der Fig. 1 ist der Körper 5 als eine Welle ausgebildet, die um eine Rotationsachse 9 rotierbar ausgebildet ist. Wird der Körper 5 beispielsweise in einer Richtung R rotiert, so wird die Maßverkörperung 6 in dieser Richtung R an den Sensoranordnungen 3, 4 vorbeibewegt. Zur Messung der Rotationsgeschwindigkeit des Körpers 5 kann die Maßverkörperung 6 entlang des im gezeigten Ausführungsbeispiel entlang einer Umfangsrichtung C verlaufenden Messweges W angeordnet sein. Die Länge des Messweges W kann dabei im gezeigten Ausführungsbeispiel dem Umfang der Welle 5 entsprechen. Selbstverständlich kann der erfindungsgemäße Inkrementalwertgeber 1 auch mit anderen Wellen, Naben oder anders geformten und womöglich nicht nur rotatorisch bewegten Körpern 5 verwendet werden. Die Maßverkörperung 6 kann entlang des Messweges W angeordnet sein, wobei der Messweg W neben rotatorischen auch translatorische Bewegungen oder Kombinationen solcher Bewegungen des Körpers 5 umfassen kann.

In der Praxis kann es vorkommen, dass die Länge des Messweges W nur ungenau bestimmt werden kann oder sich die Länge des Messweges W ändern kann. Eine genaue Bestimmung der Länge des Messweges W kann beispielsweise bei Körpern 5 mit großen Abmessungen schwierig sein. Zusätzlich kann es sein, dass die Maßverkörperung 6 an einem Körper 5 angebracht werden soll, der bereits in einer industriellen Anlage verbaut ist. Auch dann kann die Abmessung des Körpers 5 schwierig zu bestimmen sein. Ein solcher Körper 5 kann beispielsweise als eine Welle für eine Windkraftanlage ausgebildet sein, wobei die Welle einen Rotor der Windkraftanlage mit deren Generator verbinden kann. Solche Wellen können durchaus Durchmesser von mehr als einem Meter aufweisen. Ferner sind Körper 5 im Betrieb häufig großen Temperaturschwankungen ausgesetzt. Beispielsweise können die Umgebungstemperaturen von in Windkraftanlagen verbauten Wellen im Betrieb und über das Jahr hinweg zwischen -40°C und +60°C schwanken. Bedingt durch diese thermischen Schwankungen dehnen sich die Wellen aus bzw. ziehen sie sich zusammen, so dass deren Umfang sich über das Jahr hinweg ändert.

Um die Maßverkörperung 6 trotz der möglichen Maßungenauigkeiten und Maßänderungen des Körpers 5 montieren und den Inkrementalwertgeber 1 sicher dauerhaft betreiben zu können, kann die Maßverkörperung 6 mit einer Lücke 10 am Körper 5 angebracht sein. Eine Länge L der Lücke 10 kann dabei von den Maßtoleranzen des Körpers 5 bzw. von den sich auf Dauer ändernden Abmessungen des Körpers 5 bestimmt sein. Folglich kann die Lücke L bei hohen Umgebungstemperaturen größer sein als bei niedrigen Temperaturen.

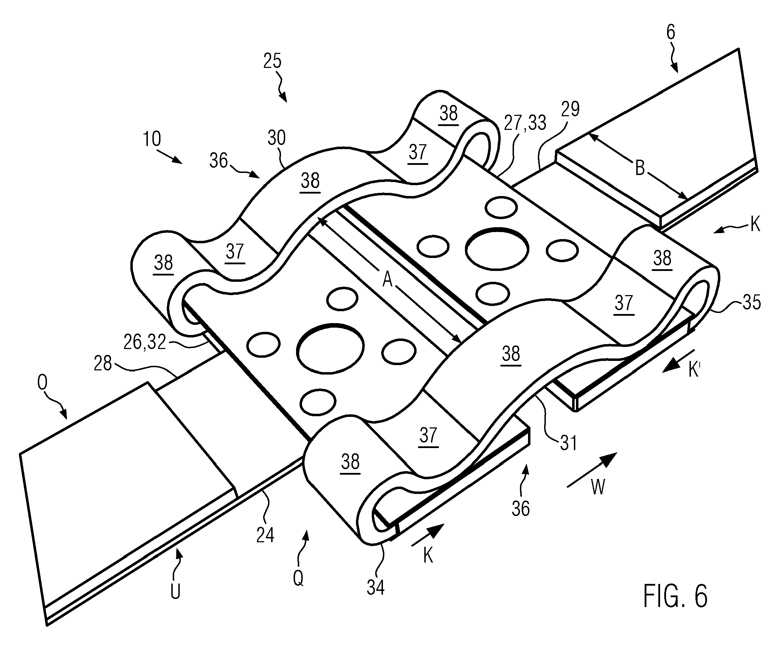

Die Lücke 10 kann mit einer entlang des Messweges W elastisch ausgebildeten Verbindungsvorrichtung überbrückt sein, welche an die Lücke 10 angrenzende Abschnitte der Maßverkörperung 6 miteinander verbinden kann. Ausführungsbeispiele einer solchen Verbindungsvorrichtung sind in den Figuren 6 bis 9 gezeigt.

Wird die Lagekodierung 7 an den Sensoranordnungen 3, 4 vorbeibewegt, so erzeugen die Sensoranordnungen 3, 4 jeweils ein Sensorsignal F_{i,1}, F_{i,,2}, in dem die Istortsfrequenz Fᵢ der Positionsmarker 8 enthalten ist. Die Sensoranordnungen 3, 4 können entlang des Messweges W so angeordnet sein, dass stets eine der Sensoranordnungen 3, 4 außerhalb der Lücke 10 angeordnet ist und zumindest eines der Signale F_{i,1}, ₂ an die Umrecheneinheit 2 übertragen werden kann. In der Umrecheneinheit 2 kann die Istortsfrequenz Fᵢ in eine Sollortsfrequenz Fₛ umgerechnet werden. Die Sollortsfrequenz Fₛ kann so vorgegeben sein, dass ein durch den Inkrementalwertgeber 1 ausgegebenes Lagesignal S für den gesamten Messweg W eine vorbestimmte Menge von Inkrementen enthält. Diese vorbestimmte Menge von Inkrementen kann dabei unabhängig von der Größe der Lücke 10 sein. Beispielsweise kann der Inkrementalwertgeber 1 pro Rotation um 360° des wellenförmigen Körpers 5 1024 Inkremente ausgeben. Die Maßverkörperung 6 kann ebenfalls 1024 Istortsperioden Pᵢ aufweisen. Die Länge L der Lücke 10 kann etwa 200 Istortsperioden Pᵢ betragen, so dass pro vollständiger Rotation des Körpers 5 1224 Istortsperioden Pᵢ durch die Sensoranordnungen 3, 4 abgetastet werden. Wird die Gesamtanzahl der Istortsperioden Pᵢ durch die Anzahl der Sollinkremente dividiert, so ergibt sich ein Umrechenfaktor für die Istortsfrequenz Fᵢ. In der Umrecheneinheit 2 kann die Istortsfrequenz Fᵢ beispielsweise mit dem Umrechenfaktor zur Bestimmung der Sollortsfrequenz Fₛ multipliziert werden.

Zur Bestimmung der Bewegungsrichtung des Körpers 5 kann jede der beiden Sensoranordnungen 3, 4 jeweils zwei Sensoren aufweisen. Diese beiden Sensoren können so entlang des Messweges W beabstandet zueinander angeordnet sein, dass einer ein sinusförmiges und der andere ein kosinusförmiges Signal ausgibt, wenn er relativ zur Maßverkörperung 6 entlang des Messweges W bewegt wird. Somit kann der Inkrementalwertgeber 1 auch dann sicher die Bewegungsrichtung des Körpers 5 bestimmen, selbst wenn die womöglich variable Länge L der Lücke 10 zu Phasenverschiebungen der Lagekodierung 7 bezüglich der Sensoranordnungen 3, 4 führen sollte.

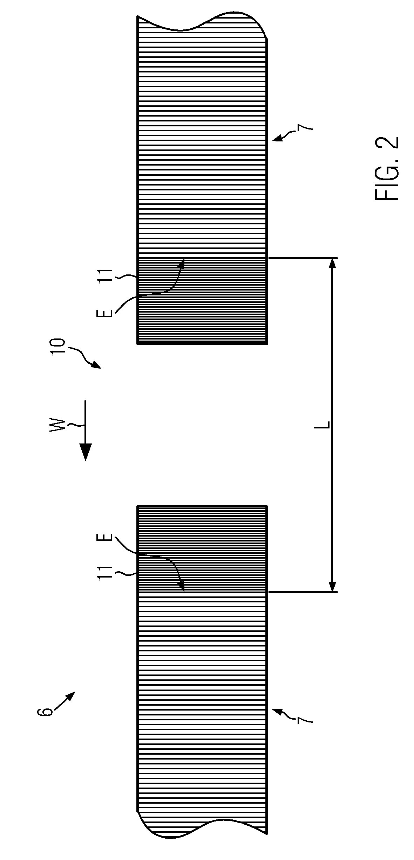

Fig. 2 zeigt die erfindungsgemäße Maßverkörperung 6 in einer schematischen Darstellung. Die Lagekodierung 7 kann sich entlang des Messweges W bis zur Lücke 10 erstrecken, deren Länge L parallel zum Messweg W verläuft. Innerhalb der Lücke 10 schließt sich an die an die Lücke 10 angrenzenden Enden E der Lagekodierung 7 jeweils eine Endlagekodierung 11 an. Erreicht eine der Sensoranordnungen 3, 4 eine der Endlagekodierungen 11, so kann der Inkrementalwertgeber 1 auf die jeweils andere Sensoranordnung 4, 3 umschalten und deren Signal zur Bestimmung des Lagesignals S verwenden. Die Endlagekodierung 11 kann eine von der Lagekodierung 7 abweichende Kodierung aufweisen. Beispielsweise können im Bereich der Endlagekodierung 11 vorgesehene Positionsmarker 8 mit einer anderen Ortsfrequenz als in der Lagekodierung 7 angeordnet sein. Die Endlagekodierung 11 kann so kodiert sein, dass durch die Sensoranordnungen 3, 4 erzeugte Signale von den Sensorsignalen F_{i,1,2} abweichen und beispielsweise eine geringere Amplitude haben als die Sensorsignale der Lagekodierung 7. Hierzu kann die Ortsfrequenz innerhalb der Endlagekodierung 11 im Vergleich zur Istortsfrequenz Fᵢ beispielsweise erhöht und insbesondere verdoppelt sein.

Im gezeigten Ausführungsbeispiel ist die Maßverkörperung 6 bandförmig ausgebildet, wobei die Endlagekodierungen 11 jeweils im Bereich eines der in die Lücke 10 ragenden Enden des Bandes angeordnet sind.

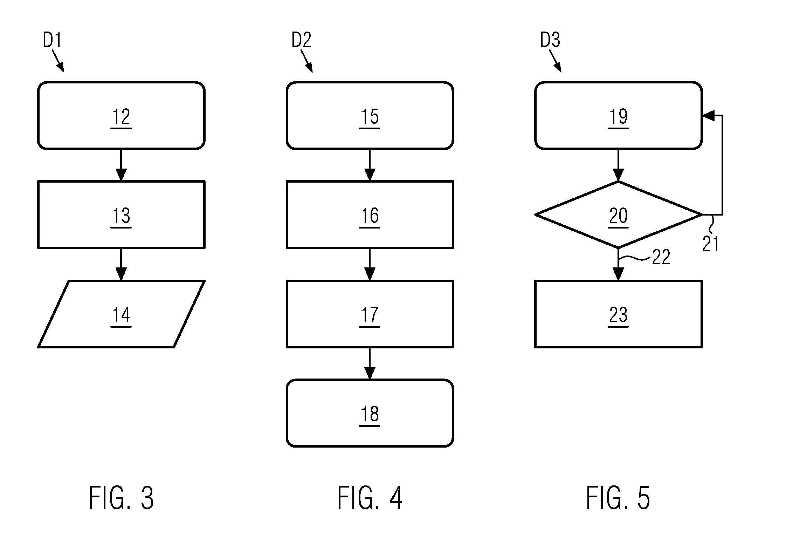

Fig. 3 zeigt ein erstes Ausführungsbeispiel des erfindungsgemäßen Verfahrens D1 zum Bestimmen der Istlage des Körpers 5. Für Elemente, die in Funktion und/oder Aufbau den Elementen der bisherigen Ausführungsbeispiele entsprechen, werden dieselben Bezugszeichen verwendet. Der Kürze halber wird lediglich auf die Unterschiede zu den Ausführungsbeispielen der Figuren eingegangen.

In einem ersten Verfahrensschritt 12 kann die Istortsfrequenz Fᵢ ermittelt werden. Beispielsweise kann die Istortsfrequenz Fᵢ aus einem der durch die Sensoranordnungen 3, 4 erzeugten Sensorsignale F_{i,1,2} ermittelt werden. In einem auf den Schritt 12 folgenden Schritt 13 kann die Sollortsfrequenz Fₛ für das Lagesignal S in Abhängigkeit von der Istortsfrequenz Fᵢ berechnet werden. Hierzu kann die Istortsfrequenz Fᵢ beispielsweise gemäß einer Umrechenvorschrift mit einem Umrechenfaktor verknüpft werden. Die Umrechenvorschrift kann an die Länge der Lücke 10 angepasst sein und der Umrechenfaktor kann durch eine Gesamtmenge von entlang des gesamten Messweges W anordenbaren Istortsperioden Pᵢ und einer vorgegebenen Menge von Sollinkrementen abhängen. Die Menge an Sollinkrementen kann beispielsweise durch einen dem Inkrementalwertgeber 1 nachgeschalteten Steuercomputer pro vollständigem Abfahren des Messweges W erwartet werden. Beispielsweise kann der Steuercomputer 100.000 Sollinkremente pro einer vollständigen Rotation der Welle erwarten. Da die Istortsfrequenz Fᵢ nicht ohne Weiteres aus den Sensorsignalen F_{i,1,2} entnehmbar sein kann, kann der Umrechnungsschritt 13 auch auf eine von der Bewegungsgeschwindigkeit des Körpers 5 abhängende und in den Sensorsignalen F_{i,1,2} enthaltene Frequenz angewendet werden.

Das Lagesignal S kann ein rechteck- oder sinusförmiges Signal, ein ein- oder mehrkanaliges oder ein eine digital kodierte Inkrementallage repräsentierendes Signal oder ein unmittelbar von diesen, zum Beispiel durch zeitliche Differentiation oder Integration, abgeleitetes Signal sein.

In einem dem Schritt 13 folgenden Verfahrensschritt 14 kann das Lagesignal S ausgegeben werden, wobei das Lagesignal S zumindest die Sollortsfrequenz Fₛ oder eine von der Sollortsfrequenz Fₛ und der Bewegungsgeschwindigkeit des Körpers 5 abhängende Zeitfrequenz enthalten kann. Dabei kann sich die Sollortsfrequenz Fₛ von der Istortsfrequenz Fᵢ unterscheiden.

Fig. 4 zeigt ein Ausführungsbeispiel eines erfindungsgemäßen Verfahrens D2, wobei für Elemente, die in Funktion und/oder Aufbau den Elementen den Ausführungsbeispielen der bisherigen Figuren entsprechen, dieselben Bezugszeichen verwendet werden. Der Kürze halber wird lediglich auf die Unterschiede zu den Ausführungsbeispielen der bisherigen Figuren eingegangen.

Fig. 4 zeigt ein Ausführungsbeispiel eines Verfahrens D2 zum Bestimmen des Umrechenfaktors für den Verfahrensschritt 13 des Ausführungsbeispiels der Fig. 3. Zunächst kann in einem Schritt 15 ein Abschnitt der Maßverkörperung 6 abgefahren werden. Insbesondere kann der Abschnitt die Lücke 10 umfassen und der Messweg W womöglich vollständig abgefahren werden. Beispielsweise bei einer sich im Wesentlichen konstant in eine Richtung drehenden Welle einer Windkraftanlage kann der Messweg W kontinuierlich im Betrieb abgefahren werden.

In einem dem Verfahrensschritt 15 folgenden Schritt 16 kann die Gesamtanzahl aller entlang des Abschnitts anordenbaren Istortsperioden Pᵢ gezählt werden. Zur Ermittlung der Länge dieses Abschnitts in Istortsperioden Pᵢ können die Istortsperioden Pᵢ gezählt werden, die entlang des Abschnittes angeordnet werden können. Zur Ermittlung der in die Lücke 10 passenden Istortsperioden Pᵢ kann ein der Länge L der Lücke 10 entsprechender Abschnitt der Lagekodierung 7 abgetastet werden. Der Start und das Ende der Lücke 10 kann durch eine der Sensoranordnungen 3, 4 anhand der Endlagekodierung 11 erkannt werden. Die andere Sensoranordnung 4, 3 kann die Lagekodierung 7 abtasten, während die Sensoranordnung 3, 4 innerhalb der Lücke 10 angeordnet ist.

Im nächsten Verfahrensschritt 17 kann die Anzahl der gezählten Istortsperioden Pᵢ mit einer Anzahl von Sollinkrementen verglichen werden. Beispielsweise kann die Anzahl der Istortsperioden Pᵢ durch die Sollinkrementanzahl dividiert und hieraus ein Umrechenfaktor für die Istortsfrequenz Fᵢ ermittelt werden.

Im nächsten Verfahrensschritt 18 kann der Umrechenfaktor dem Verfahren der Fig. 3 bereitgestellt werden. Das Verfahren der Fig. 4 kann dabei bei zur Bestimmung des Umrechenfaktors gestarteten Trainingsläufen, bei ausgewählten Betriebszuständen oder kontinuierlich im Betrieb des Inkrementalwertgebers 1 bestimmt werden.

Fig. 5 zeigt ein Ausführungsbeispiel eines Teilverfahrens D3, wobei für Elemente, die in Funktion und/oder Aufbau den Elementen der Ausführungsbeispiele der bisherigen Figuren entsprechen, dieselben Bezugszeichen verwendet werden. Der Kürze halber wird lediglich auf die Unterschiede zu den Ausführungsbeispielen der bisherigen Figuren eingegangen.

In der Fig. 5 ist schematisch gezeigt, wie zwischen den Sensoranordnungen 3, 4 umgeschaltet wird.

Im Verfahrensschritt 19 kann eine der Sensoranordnungen 3, 4 und beispielsweise die erste Sensoranordnung 3 abgefragt bzw. deren Sensorsignal F_{i,1,2} ausgewertet werden. Im folgenden Verfahrensschritt 20 kann ermittelt werden, ob beispielsweise die Sensoranordnung 3 eine der Endlagekodierungen 11 erreicht hat. Das anhand der Endlagekodierung 11 erzeugte Signal kann sich von dem anhand der Lagekodierung 7 erzeugten Sensorsignal F_{i,1,2} unterscheiden. Diese Unterschiede im Sensorsignal F_{i,1,2,} beispielsweise eine geänderte Amplitude, kann durch den Inkrementalwertgeber 1 automatisch erkannt werden. Basierend auf der Änderung des Signals kann der Inkrementalwertgeber 1 selbsttätig entscheiden, welche der Sensoranordnungen 3, 4 zur Erzeugung des Lagesignals S verwendet werden soll.

Im Zweig 21 ist der Fall gezeigt, bei dem die abgefragte Sensoranordnung 3, 4 die Endlagekodierung 11 nicht erreicht hat. Die zur Erzeugung des Lagesignals S abgefragte Sensoranordnung 3, 4 wird nicht geändert. Beispielsweise kann die Sensoranordnung 3 in diesem Zweig 21 die Lagekodierung 7 abfragen und weiterhin verwendet werden. Sollte die Sensoranordnung 3 innerhalb der keine Kodierung aufweisenden Lücke 10 angeordnet sein, so kann weiterhin die jeweils andere Sensoranordnung 4 abgefragt werden.

Im Zweig 22 erreicht die gerade abgefragte Sensoranordnung 3, 4 die Endlagekodierung 11. Folglich kann in Schritt 23 auf die jeweils andere Sensoranordnung 4, 3 umgeschaltet werden.

Fig. 6 zeigt ein erstes Ausführungsbeispiel der erfindungsgemäßen Maßverkörperung 6 mit einer Verbindungsvorrichtung. Für Elemente, die in Funktion und/oder Aufbau den Elementen der Ausführungsbeispiele der bisherigen Figuren entsprechen, werden dieselben Bezugszeichen verwendet. Der Kürze halber wird lediglich auf die Unterschiede zu den Ausführungsbeispielen der bisherigen Figuren eingegangen.

Die Maßverkörperung 6 ist auf einem Trägerband 24 angeordnet, das beispielsweise als ein Edelstahlband ausgebildet sein kann. Die Maßverkörperung 6 und das Trägerband 24 können zueinander unverschieblich miteinander verbunden sein. Das Trägerband 24 kann die Maßverkörperung 6 in Richtung auf die Lücke 10 überragen und somit als ein Verbindungselement für eine Verbindungsvorrichtung 25 zur Verfügung stehen.

Die Verbindungsvorrichtung 25 kann am Trägerband 24 fixierbare Befestigungselemente 26, 27 umfassen. Die Befestigungselemente 26, 27 können beispielsweise an in die Lücke 10 ragende Enden 28, 29 des Trägerbandes 25 fixiert werden. Zum Beispiel können die Befestigungselemente 26, 27 mit dem Trägerband 24 verschweißt werden.

Die Befestigungselemente 26, 27 können die Maßverkörperung 6 bzw. das Trägerband 24 im fixierten Zustand quer zur Maßverkörperung 6 oder auch senkrecht zum Messweg W überragen und beispielsweise als Befestigungsplatten 26, 27 ausgebildet sein. Die Enden 28, 29 des Trägerbandes 24 können zusammen mit den Befestigungselementen 26, 27 jeweils einen T-förmig ausgebildeten Befestigungsanker Q ausbilden.

Die Befestigungsplatten 26, 27 können zumindest abschnittsweise komplementär zu den Enden 28, 29 des Trägerbandes 24 ausgebildet sein. Zum Beispiel können die Befestigungselemente 26, 27 mit Aufnahmen für die Enden 28, 29 ausgeformt sein. Sind die Enden 28, 29 mit den Befestigungselementen 26, 27 verbunden, so kann eine Unterseite U der Maßverkörperung 6 und der Verbindungsvorrichtung 25 im Wesentlichen eine stufenlose Fläche ausbilden. An einer der Unterseite U gegenüberliegenden Oberseite O der Maßverkörperung 6 überragen die Befestigungselemente 26, 27 die Maßverkörperung 6 nicht.

Die Verbindungsvorrichtung 25 kann zwei Haltelemente 30, 31 aufweisen, die unverlierbar mit den Befestigungselementen 26, 27 verbunden werden können. Jedes der Halteelemente 30, 31 kann dabei die beiden Befestigungselemente 26, 27 so miteinander verbinden, dass die Befestigungselemente 26, 27 entlang der Maßverkörperung 6 bzw. parallel zum Messweg W nur um bestimmte Beträge federelastisch relativ zueinander bewegbar sind. Die Halteelemente 30, 31 können beispielsweise als federelastisch nachgebende Halteklammern ausgebildet sein, deren Federkräfte K, K' auf von der Lücke 10 wegweisenden Seiten 32, 33 auf die Befestigungselemente 26, 27 einwirken und diese aufeinander zu forcieren können. Freie Enden 34, 35 der Halteelemente 30, 31 können dabei aufeinander zu weisend ausgerichtet sein. In einem mittleren und zwischen den freien Enden 34, 35 angeordneten Abschnitt können die Halteelemente 30, 31 mit einer federelastischen Wellenstruktur 36 ausgebildet sein, wobei die Halteelemente 30, 31 im gezeigten Ausführungsbeispiel mit einer Wellenstruktur 36 ausgestaltet sind, die zwei Täler 37 und drei um die Täler 37 herum angeordnete Kämme 38 umfasst. Die freien Enden 34, 35 können jeweils zusammen mit den benachbarten Kämmen 38 und Tälern 37 in einer S-förmigen Struktur angeordnet sein.

Quer zum Messweg W bzw. senkrecht zur Maßverkörperung 6 können die Halteelemente 30, 31 voneinander beabstandet angeordnet sein. Ein Abstand A zwischen den Halteelementen 30, 31 kann dabei so bemessen sein, dass die Halteelemente 30, 31 außerhalb eines Kollisionsbereichs der Sensoranordnungen 3, 4 angeordnet sind. Beispielsweise kann der Abstand A wenigstens einer Breite B der Maßverkörperung 6 entsprechen.

Durch die federelastischen Halteelemente 30, 31 kann die Maßverkörperung 6 bzw. deren Trägerband 24 entlang des Messweges W verspannt sein. Verläuft der Messweg W beispielsweise um den als Welle ausgebildeten Körper 5, so kann die Maßverkörperung 6 durch die Federkräfte K, K' entlang einer Mantelfläche des Körpers 5 verspannt anliegen. Durch die Federkräfte K, K' kann die Maßverkörperung 6 unverschieblich gegen den Körper 5 gedrückt sein.

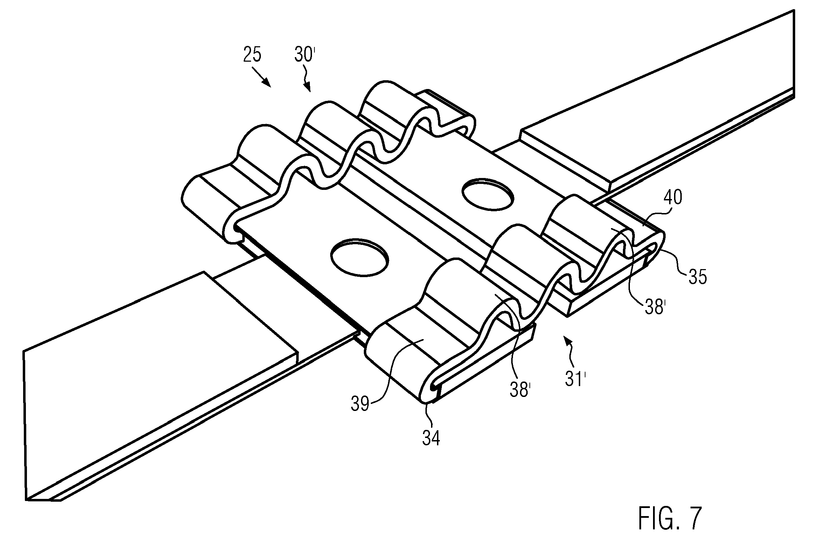

Fig. 7 zeigt die erfindungsgemäße Maßverkörperung mit einem weiteren Ausführungsbeispiel der Verbindungsvorrichtung 25. Für Elemente, die in Funktion und/oder Aufbau den Elementen der Ausführungsbeispiele der bisherigen Figuren entsprechen, werden dieselben Bezugszeichen verwendet. Der Kürze halber wird lediglich auf die Unterschiede zu den Ausführungsbeispielen der bisherigen Figuren eingegangen.

Fig. 7 zeigt die Verbindungsvorrichtung 25 mit Halteelementen 30', 31', deren äußere Kämme 38' nicht wie im Ausführungsbeispiel der Fig. 6 an den freien Enden 34, 35 enden. Vielmehr gehen die äußeren Kämme 38' über parallel zur Maßverkörperung 6 verlaufende Abschnitte 39, 40 in die freien Enden 34, 35 über. Die freien Enden 34, 35 und die parallel zur Maßverkörperung 6 verlaufenden Abschnitte 39, 40 sind im Wesentlichen J-förmig ausgebildet, wobei die Abschnitte 39, 40 die langen Seiten des J ausbilden.

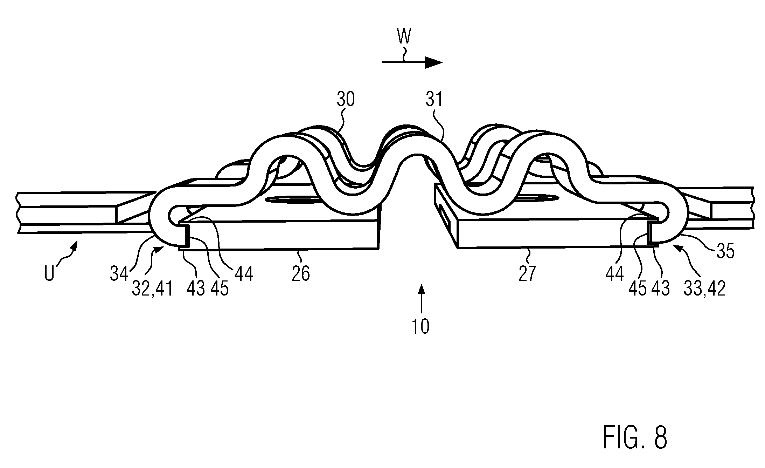

Fig. 8 zeigt das Ausführungsbeispiel der Fig. 7 in einer schematischen Seitenansicht.

Die Befestigungselemente 26, 27 können, wie in dieser Ansicht besonders deutlich erkennbar, an ihren von der Lücke 10 weg weisenden Seiten 32, 33 mit Haltenuten 41, 42 für die freien Enden 34, 35 der Halteelemente 30, 31 ausgebildet sein. Die Haltenuten 41, 42 können mit ihren offenen Seiten von der Lücke 10 weg weisen und quer zum Messweg W bzw. senkrecht zur Maßverkörperung 6 entlang der Befestigungselemente 26, 27 verlaufen. Wangen 43, 44 können die Nuten 41, 42 senkrecht zur Unterseite U der Maßverkörperung 6 begrenzen. Die Wangen 43, 44 können die Lage der Halteelemente 30, 31 senkrecht zur Unterseite U gegen ungewollte Verschiebungen sichern. Die freien Enden 34, 35 der Halteelemente 30, 31 können im montierten Zustand der Maßverkörperung 6 in die im Wesentlichen U-förmigen Haltenuten 41, 42 ragen und an deren Grund 45 anliegen.

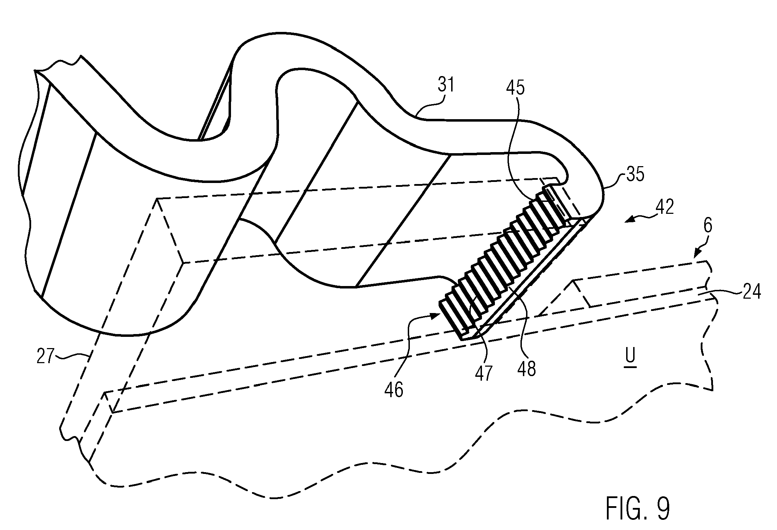

Fig. 9 zeigt das Ausführungsbeispiel der Figuren 7 und 8 schematisch in einer Ansicht auf die Unterseite U der Maßverkörperung 6. Die Maßverkörperung 6 und eines der Befestigungselemente 26, 27 sind transparent gezeigt und gestrichelt dargestellt.

Das freie Ende 35 ragt in die Haltenut 42 und kann mit dieser reibschlüssig verbunden sein, so dass die Halteelemente 30, 31 hierdurch gegen ein ungewolltes Verschieben entlang der Haltenuten 41, 42 gesichert sein können. Die freien Enden 34, 35, von denen in der Fig. 9 nur das freie Ende 35 gezeigt ist, kann mit einer Sicherungsstruktur 46 ausgebildet sein, durch welche der Reibschluss zwischen den freien Enden 34, 35 und den Befestigungselementen 26, 27 verstärkt ist. Beispielsweise kann die Sicherungsstruktur 46 aufgeraut und insbesondere sägezahnförmig ausgebildet sein, so dass Spitzen bzw. Kanten der Sicherungsstruktur 46 gegen den Grund 45 der Haltenuten 41, 42 drücken. Insbesondere kann die Sicherungsstruktur 46 so ausgebildet sein, dass gegen den Grund 45 gepresste Kanten 47 senkrecht zur jeweiligen Haltenut 41, 42 verlaufend angeordnet sind. Die Kanten 47 können zu sägezahnförmigen Strukturen 48 der Sicherungsstruktur 46 zugeordnet sein.

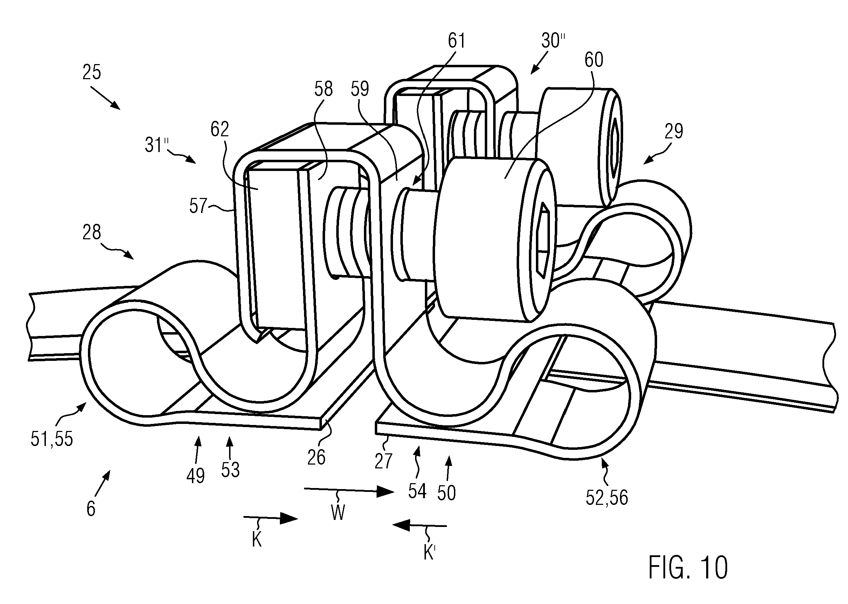

Fig. 10 zeigt ein weiteres Ausführungsbeispiel der erfindungsgemäßen Maßverkörperung 6 mit einer Verbindungsvorrichtung 25. Für Elemente, die in Funktion und/oder Aufbau den Elementen der Ausführungsbeispiele der bisherigen Figuren entsprechen, werden dieselben Bezugszeichen verwendet. Der Kürze halber wird lediglich auf die Unterschiede zu den Ausführungsbeispielen der bisherigen Figuren eingegangen.

Die Halteelemente 30", 31" können zweiteilig ausgebildet sein. Beispielsweise können die Halteelemente 30", 31" jeweils zwei miteinander interagierende Ausgleichseinrichtungen 49, 50 aufweisen. Das Halteelement 30" kann wie das Halteelement 31" ausgebildet sein. Der Einfachheit halber ist hier nur auf die Details der Ausgestaltung des Halteelementes 31" eingegangen. Die Ausgleichseinrichtungen 49, 50 können jeweils an einem der Befestigungselemente 26, 27 befestigt und insbesondere einstückig mit den Befestigungselementen 26, 27 ausgebildet sein. An die Befestigungselemente 26, 27 können sich Federorgane 51, 52 anschließen, die die Federkräfte K, K' zumindest teilweise aufbringen können. Die Federorgane 51, 52 können buchtförmig ausgebildet sein, wobei offenen Enden 53, 54 der durch die Federorgane 51, 52 gebildeten Buchten 55, 56 aufeinander zu weisen können. In ihrem Verlauf weg von den Befestigungselementen 26, 27 können die Ausgleichseinrichtungen 49, 50 Halteorgane 57, 58 aufweisen. Die Halteorgane 57, 58 können so ausgebildet sein, dass sie einander parallel zum Messweg W überlappen. Beispielsweise können die Halteorgane 57, 58 senkrecht zum Messweg W verlaufen und entlang des Messweges W hintereinander angeordnet sein. Insbesondere kann das Halteorgan 58 zwischen dem Halteorgan 57 und einem dem Halteorgan 57 gegenüberliegend angeordneten Anschlagelement 59 angeordnet sein. Das Anschlagelement 59 kann dabei wie das Halteorgan 57 Teil der Ausgleichseinrichtung 50 sein.

Bei der Montage der Maßverkörperung 6 können die Halteorgane 57, 58 in die dargestellte überlappende Anordnung gebracht werden. Die Halteorgane 57, 58 können also ineinander eingehakt sein und somit die Enden 28, 29 der Maßverkörperung 6 miteinander verbinden.

Um die Lage der Ausgleichseinrichtungen 49, 50 zueinander sichern zu können, kann die Verbindungsvorrichtung 25 wenigstens ein Fixierorgan 60 umfassen, welches Verschiebungen der Ausgleichseinrichtungen 49, 50 relativ zueinander zumindest begrenzt. Beispielsweise kann das Fixierorgan 60 als eine Schraube ausgebildet sein, die durch eine sich parallel zum Messweg W erstreckende Öffnung 61 im Anschlagelement 59 ragen kann. Zur Verbindung der Ausgleichseinrichtungen 49, 50 kann die Verbindungsvorrichtung 25 ferner ein zweites und mit dem Fixierorgan 60 interagierendes Fixierorgan 62 aufweisen. Zum Beispiel kann das zweite Fixierorgan 62 als eine Schraubenmutter ausgestaltet sein, die mit dem schraubenförmigen Fixierorgan 60 verschraubbar ist. Insbesondere kann das zweite Fixierorgan 62 an einer vom Anschlagelement 59 wegweisenden Seite 63 des Halteorgans 58 anliegen und am Halteorgan 58 befestigt und mit diesem beispielsweise verklebt sein. Werden die Fixierorgane 60, 62 miteinander verbunden und beispielsweise miteinander verschraubt, so kann das Halteorgan 58 mit dem Anschlagelement 59 verpresst werden. Hierdurch können die Enden 28, 29 der Maßverkörperung 6 optimal aneinander befestigt sein, wobei die Federorgane 51, 52 die Federkräfte K, K' aufbringen.

Die erfindungsgemäße Ausgestaltung der Verbindungsvorrichtung 25 des Ausführungsbeispiels der Fig. 10 hat ferner den Vorteil, dass die Höhe der Federkräfte K, K' durch die Fixierorgane 60, 62 vorgebbar ist. So kann das schraubenförmige Fixierorgan 60 nur soweit in das schraubenmutterförmige zweite Fixierorgan 62 eingeschraubt sein, dass die Federkräfte K, K' in einer gewünschten Höhe hervorgerufen werden. Ändert sich die Länge des Messweges W, so schwanken die Federkräfte K, K' um diese vorgegebenen Federkräfte.

## Patentansprüche

1. Verfahren zum Bestimmen einer Istlage eines Körpers (5) entlang eines Messweges (W) und/oder deren Änderung aufweisend die folgenden Verfahrensschritte:
a) Abtastung einer Vielzahl von entlang eines Messweges (W) mit einer vorbestimmten Istortsfrequenz (Fi) angeordneten Positionsmarkern (8) einer zumindest eine Lücke (10) aufweisenden Lagekodierung (7) von wenigstens zwei entlang des Messweges (W) voneinander beabstandet angeordneten Sensoranordnungen (3, 4), von denen im Betrieb stets zumindest eine außerhalb der Lücke (10) angeordnet ist;
b) Erkennung eines Startes und Endes der Lücke (10) durch eine der Sensoranordnungen (3, 4) anhand einer von der Lagekodierung (7) abweichenden Endlagekodierung (11), die an die Lücke (10) angrenzenden Enden (E) der Lagekodierung (7) ausgeformt sind;
c) Umrechnung der von den Sensoranordnungen (3, 4) abgetasteten Istortsfrequenz (Fi) in eine Sollortsfrequenz (Fs) durch eine Umrecheneinheit (2) und
d) Erzeugung ein für die Istlage und / oder deren Änderung repräsentatives Lagesignal (S).

2. Verfahren nach Anspruch 1, **dadurch gekennzeichnet, dass** zum Erzeugen des Lagesignals (S) ein vorbestimmter, die wenigstens eine Lücke (10) enthaltender Abschnitt des Messweges (W) abgefahren und die Länge (L) der Lücke (10) in Istortsperioden (Pᵢ) der mit der Istortsfrequenz (Fᵢ) angeordneten Positionsmarker (8) ermittelt wird.

3. Verfahren (D1) nach Anspruch 2, **dadurch gekennzeichnet, dass** die Länge (L) des Abschnitts im Betrieb ermittelt wird.

4. Verfahren (D1) nach Anspruch 2 oder 3, **dadurch gekennzeichnet, dass** zur Ermittlung der Länge (L) der Lücke (10) ein der Lücke (10) entsprechender Teil der Lagekodierung (7) abgetastet wird.

5. Verfahren (D1) nach einem der Ansprüche 2 bis 4, **dadurch gekennzeichnet, dass** die Gesamtlänge des Messweges (W) einschließlich der Lücke (10) als Gesamtanzahl von Istortsperioden (Pᵢ) ermittelt wird.

6. Verfahren (D1) nach Anspruch 2 oder 5, **dadurch gekennzeichnet, dass** zum Erzeugen des Lagesignals (S) die Anzahl der Istortsperioden (Pᵢ) mit einer Sollmenge von Sollortsperioden verglichen und hieraus eine Umrechenvorschrift für die Istortsfrequenz (Fᵢ) ermittelt wird.

7. Inkrementalwertgeber (1) zur Bestimmung einer Istlage eines Körpers (5) entlang eines Messweges (W) und/oder deren Änderung, wobei der Inkrementalwertgeber (1) im Betrieb ein für die Istlage und/oder deren Änderung repräsentatives Lagesignal (S) ausgibt, mit wenigstens einer sich entlang des Messweges (W) erstreckenden Maßverkörperung (6), die durch wenigstens eine Lücke (10) unterbrochenen und mit einer eine Vielzahl von Positionsmarkern (8) aufweisenden Lagekodierung (7) ausgebildet ist, wobei die Positionsmarker (8) entlang des Messweges (W) mit einer vorgegebenen Istortsfrequenz (Fᵢ) angeordnet sind, und mit wenigstens zwei entlang des Messweges (W) voneinander beabstandet angeordneten Sensoranordnungen (3, 4) zur Abtastung der Lagekodierung (7), von denen im Betrieb stets zumindest eine außerhalb der Lücke (10) angeordnet ist, und die Lagekodierung (7) abtasten kann, wobei eine Umrecheneinheit (2) vorgesehen ist, durch welche die von den Sensoranordnungen (3, 4) abgetastete Istortsfrequenz (Fᵢ) in eine Sollortsfrequenz (Fₛ) umrechenbar ist, **dadurch gekennzeichnet, dass** die Lagekodierung (7) durch die Lücke (10) unterbrochen ist und an die Lagekodierung (7) angrenzende Bereiche der Lücke (10) mit einer von der Lagekodierung (7) abweichenden Endlagekodierung (11) ausgeformt sind.

8. Inkrementalwertgeber (1) nach Anspruch 7, **dadurch gekennzeichnet, dass** im Betrieb der Umrecheneinheit (2) eingangsseitig zumindest ein Sensorsignal (F_{i,1,2}) mit der Istortsfrequenz (Fᵢ) von wenigstens einer der zwei Sensoranordnungen (3, 4) zugeführt ist und an einem Signalausgang der Umrecheneinheit (2) ein Ausgangssignal anliegt, in dem die von der Istortsfrequenz (Fᵢ) abgeleitete Sollortsfrequenz (Fₛ) enthalten ist.

9. Inkrementalwertgeber (1) nach Anspruch 7 oder 8, **dadurch gekennzeichnet, dass** die Positionsmarker (8) mit einer von der Istortsfrequenz abhängenden Istortsperiode (Pᵢ) entlang des Messweges (W) angeordnet sind.

10. Inkrementalwertgeber (1) nach Anspruch 7, **dadurch gekennzeichnet, dass** die Endlagekodierung (11) Endlagemarker aufweist, die entlang des Messweges (W) in einer von der Istortsfrequenz (Fᵢ) der Lagekodierung (7) abweichenden Ortsfrequenz angeordnet sind.

11. Inkrementalwertgeber (1) nach einem der Ansprüche 7 bis 10, **dadurch gekennzeichnet, dass** an die Lücke (10) angrenzende Enden (E) der Maßverkörperung (6) durch eine Verbindungsvorrichtung (25) unverlierbar miteinander verbunden sind, wobei die Verbindungsvorrichtung (25) zumindest teilweise entlang des Messweges (W) federelastisch nachgebend ausgebildet ist.

12. Inkrementalwertgeber (1) nach Anspruch 11, **dadurch gekennzeichnet, dass** ein federelastischer Bereich der Verbindungsvorrichtung (25) so ausgebildet ist, dass die Verbindungsvorrichtung (25) thermisch bedingte mechanische Spannungen in der entlang des Messweges (W) montierten Maßverkörperung (6) ausgleicht.

13. Inkrementalwertgeber (1) nach Anspruch 11 oder 12, **dadurch gekennzeichnet, dass** die Verbindungsvorrichtung (25) außerhalb eines Kollisionsbereichs der wenigstens zwei Sensoranordnungen (3, 4) angeordnet ist.

## Claims

1. Procedure for determining the actual position of a body (5) along a measured path (W) and/or change therein, comprising the following procedural steps:
a) the scanning of a large number of position markers (8), located along a measured path (W) with a predetermined actual spatial frequency (Fi), of a position encoding (7), having at least one gap (10), of at least two sensor arrays (3, 4) located along the measured path (W) at a distance from each other, at least one of which is always located outside the gap (10) during operation;
b) detection of a beginning and end of the gap (10) by one of the sensor arrays (3, 4) on the basis of an end position encoding (11) differing from the position encoding (7), said end position encoding being formed at the ends (E) of the position encoding (7) adjacent to the gap (10);
c) conversion of the actual spatial frequency (Fi) scanned by the sensor arrays (3, 4) into a target spatial frequency (Fs) by a conversion unit (2) and
d) generation of a position signal (S) representative of the actual position and / or change therein.

2. Procedure in accordance with Claim 1, **characterized in that,** in order to generate the position signal (S), a predetermined section of the measured path (W) containing at least one gap (10) is covered and the length (L) of the gap (10) is determined in actual spatial periods (Pᵢ) of the position markers (8) located with the actual spatial frequency (Fᵢ).

3. Procedure (D1) in accordance with Claim 2, **characterized in that** the length (L) of the section is determined in operation.

4. Procedure (D1) in accordance with Claim 2 or 3, **characterized in that** a part of the position encoding (7) corresponding to the gap (10) is scanned to determine the length (L) of the gap (10).

5. Procedure (D1) in accordance with one of the Claims 2 to 4, **characterized in that** the total length of the measured path (W) including the gap (10) is determined as the total number of actual spatial periods (Pᵢ).

6. Procedure (D1) in accordance with Claim 2 or 5, **characterized in that,** in order to generate the position signal (S), the number of actual spatial periods (Pᵢ) is compared with a target quantity of target spatial periods and that from this, a conversion rule is determined for the actual spatial frequency (Fᵢ).

7. Incremental value encoder (1) for determining the actual position of a body (5) along a measured path (W) and/or any change therein, whereby during operation the incremental value encoder (1) issues a position signal (S) representative of the actual position and/or change therein, with at least one material measure (6) which stretches along the measured path (W) and which is formed by a position encoding (7) interrupted by at least one gap (10) and which has a large number of position markers (8), whereby the position markers (8) are located along the measured path (W) with a predefined actual spatial frequency (Fᵢ), and with at least two sensor arrays (3, 4) located along the measured path (W) at a distance from each other to scan the position encoding (7), at least one of which is always located outside the gap (10) during operation, and which can scan the position encoding (7), whereby a conversion unit (2) is provided for, through which the actual spatial frequency (Fᵢ) scanned by the sensor arrays (3, 4) can be converted into a target spatial frequency (Fₛ), **characterized in that** the position encoding (7) is interrupted by the gap (10) and that the areas of the gap (10) adjacent to the position encoding (7) are formed with an end position encoding (11) differing from the position encoding (7).

8. Incremental value encoder (1) in accordance with Claim 7, **characterized in that** during operation, the conversion unit (2) is fed at least one sensor signal (F_{i,1,2}) on the input side with the actual spatial frequency (Fᵢ) of at least one of the two sensor arrays (3, 4) and that at the signal output of the conversion unit (2) there is an output signal containing the target spatial frequency (Fₛ) derived from the actual spatial frequency (Fᵢ).

9. Incremental value encoder (1) in accordance with Claim 7 or 8, **characterized in that** the position markers (8) are located along the measured path (W) with an actual spatial period (Pᵢ) that depends on the actual spatial frequency.

10. Incremental value encoder (1) in accordance with Claim 7, **characterized in that** the end position encoding (11) has end position markers that are located along the measured path (W) at a spatial frequency that differs from the actual spatial frequency (Fᵢ) of the position encoding (7).

11. Incremental value encoder (1) in accordance with one of the Claims 7 to 10, **characterized in that** the ends (E) of the material measure (6) adjacent to the gap (10) are inseparably connected to each other by a connecting device (25), whereby the connecting device (25) is designed to be at least partly resiliently yielding along the measured path (W).

12. Incremental value encoder (1) in accordance with Claim 11, **characterized in that** a resilient section of the connecting device (25) is designed in such a way that the connecting device (25) can compensate for thermally induced mechanical tensions in the material measure (6) mounted along the measured path (W).

13. Incremental value encoder (1) in accordance with Claim 11 or 12, **characterized in that** the connecting device (25) is located outside a collision area of the at least two sensor arrays (3, 4).

## Revendications

1. Procédé permettant de déterminer la position réelle d'un corps (5) le long d'une voie de mesure (W) et/ou sa modification comprenant les étapes consistant à :
a) détecter une pluralité de marqueurs de position (8) disposés le long d'une voie de mesure (W) avec une fréquence locale réelle prédéterminée (Fi) d'un codage de position (7) présentant au moins un interstice (10) d'au moins deux agencements de capteur (3, 4) disposés à distance l'un de l'autre le long de la voie de mesure (W), l'un des deux au moins étant disposé en dehors de l'interstice (10) en permanence en cours de fonctionnement ;
b) détecter le début et la fin de l'interstice (10) par l'un des agencements de capteur (3, 4) à l'aide d'un codage de position finale (11) différent du codage de position (7), qui sont déformés au niveau des extrémités (E) avoisinant l'interstice (10) du codage de position (7) ;
c) convertir la fréquence locale réelle (Fi) détectée par les agencements de capteur (3, 4) en une fréquence locale théorique (Fs) par une unité de conversion (2) et
d) générer un signal de position (S) représentatif de la position réelle et/ou de sa modification.

2. Procédé selon la revendication 1, **caractérisé en ce que,** pour générer le signal de position (S), une section prédéterminée de la voie de mesure (W) comprenant le au moins un interstice (10) est déplacée et la longueur (L) de l'interstice (10) est déterminée dans les périodes locales réelles (Pᵢ) des marqueurs de position (8) disposés avec la fréquence locale réelle (Fᵢ).

3. Procédé (D1) selon la revendication 2, **caractérisé en ce que** la longueur (L) de la section est déterminée en cours de fonctionnement.

4. Procédé (D1) selon la revendication 2 ou 3, **caractérisé en ce que,** pour déterminer la longueur (L) de l'interstice (10), une partie du codage de position (7) correspondant à l'interstice (10) est détectée.

5. Procédé (D1) selon l'une des revendications 2 à 4, **caractérisé en ce que** la longueur totale de la voie de mesure (W), y compris de l'interstice (10), est déterminée en tant que nombre total de périodes locales réelles (Pᵢ).

6. Procédé (D1) selon la revendication 2 ou 5, **caractérisé en ce que,** pour générer le signal de position (S), le nombre de périodes locales réelles (Pᵢ) est comparé à une quantité théorique de périodes locales théoriques et une prescription de conversion est déterminée à partir de cela pour la fréquence locale réelle (Fᵢ).

7. Codeur de valeur incrémental (1) permettant de déterminer une position réelle d'un corps (5) le long d'une voie de mesure (W) et/ou sa modification, le codeur de valeur incrémental (1) émettant en fonctionnement un signal de position (S) représentatif de la position réelle et/ou de sa modification, avec au moins un étalon de mesure (6) s'étendant le long de la voie de mesure (W), qui est interrompu par au moins un interstice (10) et présentant un codage de position (7) comportant une pluralité de marqueurs de position (8), les marqueurs de position (8) étant disposés le long de la voie de mesure (W) avec une fréquence locale réelle prédéfinie (Fᵢ), et avec au moins deux agencements de capteur (3, 4) disposés à distance l'un de l'autre le long de la voie de mesure (W) pour la détection du codage de position (7), l'un des deux au moins étant disposé en dehors de l'interstice (10) en permanence en cours de fonctionnement, et pouvant détecter le codage de position (7), une unité de conversion (2) étant prévue, laquelle permettant de convertir la fréquence locale réelle (Fᵢ) détectée par les agencements de capteur (3, 4) en une fréquence locale théorique (Fₛ), **caractérisé en ce que** le codage de position (7) est interrompu par l'interstice (10) et les zones de l'interstice (10) avoisinant le codage de position (7) sont déformées avec un codage de position finale (11) différent du codage de position (7).

8. Codeur de valeur incrémental (1) selon la revendication 7, **caractérisé en ce que,** lors du fonctionnement de l'unité de conversion (2), au moins un signal de capteur (F_{i,1,2}) avec la fréquence locale réelle (Fᵢ) d'au moins un des deux agencements de capteur (3, 4) est émis du côté de l'entrée et **en ce qu'**un signal de sortie se trouve à une sortie de signal de l'unité de conversion (2), lequel comprend la fréquence locale théorique (Fₛ) dérivée de la fréquence locale réelle (Fᵢ).

9. Codeur de valeur incrémental (1) selon la revendication 7 ou 8, **caractérisé en ce que** les marqueurs de position (8) avec une période locale réelle (Pᵢ) dépendant de la fréquence locale réelle sont disposés le long de la voie de mesure (W).

10. Codeur de valeur incrémental (1) selon la revendication 7, **caractérisé en ce que** le codage de position finale (11) présente des marqueurs de position finale, qui sont disposés le long de la voie de mesure (W) dans une fréquence locale différente de la fréquence locale réelle (Fᵢ) du codage de position (7).

11. Codeur de valeur incrémental (1) selon l'une des revendications 7 à 10, **caractérisé en ce que** les extrémités (E) de l'étalon de mesure (6) avoisinant l'interstice (10) sont raccordées entre elles définitivement par un dispositif de raccordement (25), le dispositif de raccordement (25) étant conçu avec la flexibilité d'un ressort au moins en partie le long de la voie de mesure (W).

12. Codeur de valeur incrémental (1) selon la revendication 11, **caractérisé en ce qu'**une zone à la flexibilité d'un ressort du dispositif de raccordement (25) est conçue de telle sorte que le dispositif de raccordement (25) compense les tensions mécaniques dues aux contraintes thermiques dans l'étalon de mesure (6) monté le long de la voie de mesure (W).

13. Codeur de valeur incrémental (1) selon la revendication 11 ou 12, **caractérisé en ce que** le dispositif de raccordement (25) est disposé en dehors de la zone de collision des au moins deux agencements de capteur (3, 4).
